# EUROPEAN PATENT APPLICATION

(11) **EP 4 834 090 A1**
(43) Date of publication of application: **04.11.2026**
(21) Application number: 24911955.3
(22) Date of filing: 22.10.2024
(51) Int. Cl.: A01D 46/00

(54) **RAIL SYSTEM**

(30) Priority: 27.12.2023 JP 2023220824
(71) Applicant: Kubota Corporation, Osaka-shi, Osaka 530-0011 (JP)
(72) Inventor: YAMAMOTO MURAKAMI, Edwardo Arata, Sakai-shi, Osaka 590-0908 (JP); NAKANISHI, Ryutaro, Sakai-shi, Osaka 590-0908 (JP); TANAKA, Satoshi, Sakai-shi, Osaka 590-0908 (JP); NISHIKORI, Hiroki, Sakai-shi, Osaka 590-0908 (JP)
(74) Representative: Cabinet Beau de Loménie
(86) International application number: PCT/JP2024/037626
(87) International publication number: WO 2025/142062

(57) **Abstract**

A rail system includes: a pair of fixed rails that is located between multiple solar cell panels installed in a farm field and a ground; a moving beam whose both ends self-travel along the pair of fixed rails; and a slider that self-travels along the moving beam.

## Description

### TECHNICAL FIELD

The present disclosure relates to a rail system. The present application claims priority based on Japanese Patent Application No. 2023-220824 filed on December 27, 2023, the entire contents of which are incorporated herein by reference.

### BACKGROUND ART

Patent Literature 1 describes a system in which a robot for harvesting a product is hung on a wire provided above a crop and moved along the wire.

### CITATION LIST

### [PATENT LITERATURE]

PATENT LITERATURE 1: Japanese Laid-Open Patent Publication No. 2023-22425

### SUMMARY OF THE INVENTION

A rail system according to an aspect of the present disclosure includes a pair of fixed rails that is located between multiple solar cell panels installed in a farm field and a ground, a moving beam whose both ends self-travel along the pair of fixed rails, and a slider that self-travels along the moving beam.

### BRIEF DESCRIPTION OF DRAWINGS

[FIG. 1] FIG. 1 is a schematic view illustrating an example of an overview of a rail system according to Embodiment 1.
[FIG. 2] FIG. 2 is a perspective view of the rail system from which solar cell panels are removed.
[FIG. 3] FIG. 3 is an enlarged schematic view of a cross section of FIG. 1.
[FIG. 4] FIG. 4 is an enlarged view of a fixed rail, a moving beam, and a bridge rail in FIG. 1.
[FIG. 5] FIG. 5 is a block diagram illustrating an example of a hardware configuration of a control device.
[FIG. 6] FIG. 6 is a schematic view illustrating a moving process of the moving beam on the bridge rail.
[FIG. 7] FIG. 7 is a perspective view illustrating an outline of a modified example of the rail system according to the present disclosure.
[FIG. 8] FIG. 8 is an enlarged schematic view of a cross section of FIG. 7.

### DETAILED DESCRIPTION

### <Problem to be Solved by Present Disclosure>

The system is capable of moving the robot along the wire and thereby moving the robot in a longitudinal direction of the wire. However, a direction intersecting the wire is limited to an operating range of the arm of the robot. Thus, the robot may not reach a fruit.

In view of the above-described conventional problem, an object of the present disclosure is to provide a system capable of moving a robot or the like in a direction intersecting a guide member such as a wire.

### <Effects of Present Disclosure>

According to the present disclosure, it is possible to move a robot or the like, provided on a slider, also in a direction intersecting a guide member such as a fixed rail.

### <Outline of Embodiments of Present Disclosure>

Hereinafter, an outline of embodiments of the present disclosure will be listed and described.

(1) A rail system according to an aspect of the present disclosure includes a pair of fixed rails that is located between multiple solar cell panels installed in a farm field and a ground, a moving beam whose both ends self-travel along the pair of fixed rails, and a slider that self-travels along the moving beam.

According to the rail system of the present embodiment, the slider can also be moved in a direction intersecting the fixed rail.

(2) In the above (1), the slider may include: a slider body that is provided with a farmwork tool; and a slider moving device that moves the slider body.

As a result, the farmwork tool provided on the slider can be moved in the direction intersecting the fixed rail.

(3) In the above (1) or (2), the rail system of the present embodiment may further include a bridge rail that connects ends of the pair of fixed rails, and the moving beam is movable along the bridge rail when the both ends are located at the ends of the pair of fixed rails.

As a result, the moving beam can move to the adjacent fixed rail connected by the bridge rail, and the slider can be moved in the direction intersecting the fixed rail in a wider range.

(4) In any one of the above (1) to (3), the moving beam may include at both ends thereof a pair of beam moving devices for self-travelling on the pair of fixed rails, and a control device that controls the pair of beam moving devices, each of the pair of beam moving devices includes: a first wheel that travels on the fixed rail; a second wheel that is disposed coaxially with the first wheel and travels on the fixed rail; a first motor that drives the first wheel; and a second motor that drives the second wheel, and the control device independently controls the first motor and the second motor of each of the beam moving devices.

As a result, the moving beam can self-travel along the fixed rail.

(5) In any one of the above (1) to (4), the rail system of the present embodiment may further include a power supply device that supplies power, generated by the multiple solar cell panels, to the moving beam and the slider.

This allows the rail system to operate even without external power supply.

(6) In any one of the above (1) to (5), the pair of fixed rails may be a part of a frame that supports the multiple solar cell panels above the farm field.

This reduces the height of the rail system and improves the strength of the rail system.

### [Definition of Terms]

Definitions of terms used in this application are as follows.
· Farm field: It refers to a place for cultivating crops, and includes a paddy field, a field, and an orchard.
· Solar cell panel: A panel-like device for generating electricity by solar light.
· Rail: An elongated steel material laid for supporting wheels of a moving object and smoothly running the moving object in a certain direction.
· Beam: An elongated pillar-shaped member disposed horizontally and supporting some object.
· Slider: A member for slidably moving a connected object.
· Reflective photosensor: A sensor in which a light emitting element and a light receiving element are provided in the same direction. It applies light from the light emitting element to an object to be detected, and causes the light receiving element to detect light reflected and returned.
· Triaxial magnetic sensor: A sensor capable of simultaneously measuring magnetic flux densities (geomagnetism) in three directions.

### [Details of Embodiments of Present Disclosure]

Hereinafter, embodiments of the present disclosure will be described in detail with reference to the drawings. Note that, at least some of the embodiments described below may be combined as appropriate.

### [1-1 Overall Configuration of Rail System]

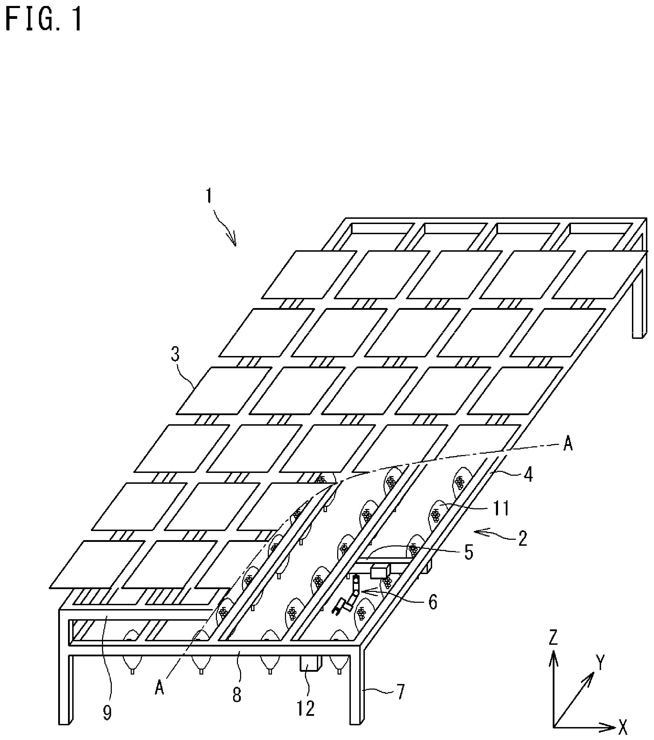

FIG. 1 is a schematic view illustrating an example of an overview of a rail system according to this embodiment. FIG. 1 illustrates a configuration below solar cell panels by cutting a part of the solar cell panels along a break line A-A.

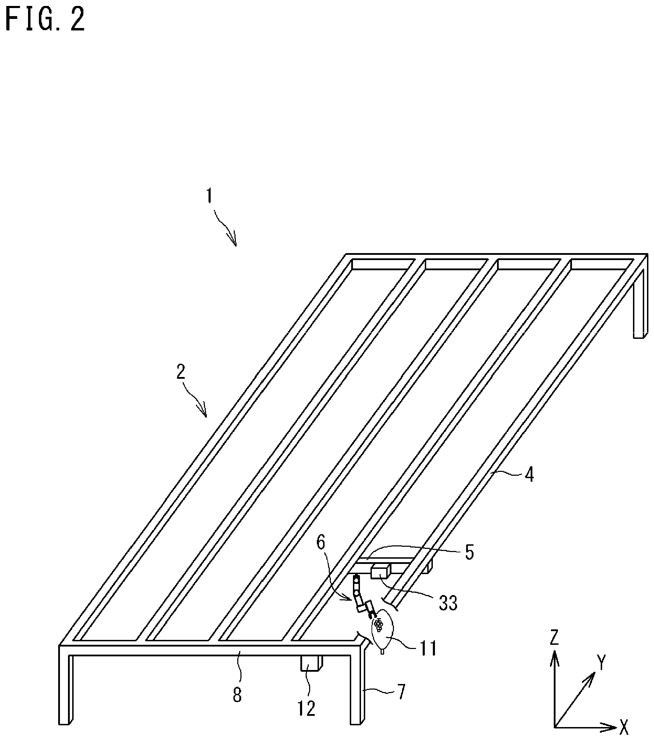

FIG. 2 is a perspective view of the rail system from which the solar cell panels are removed.

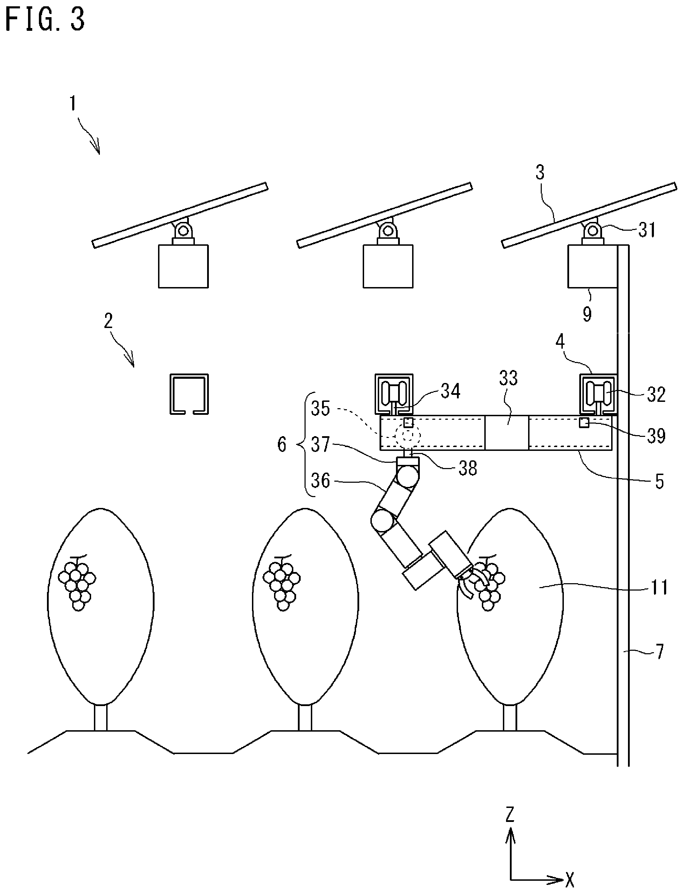

FIG. 3 is an enlarged schematic view of a cross section of FIG. 1.

Here, an X direction in FIG. 1 is a direction orthogonal to the longitudinal direction of a fixed rail 4 and parallel to a ground of a farm field 2. A Y direction in FIG. 1 is the longitudinal direction of the fixed rail 4. A Z direction in FIG. 1 is a direction perpendicular to the ground of the farm field 2. The same applies to FIGs. 2 to 4 and FIGs. 6 to 8.

As illustrated in FIG. 1, the rail system 1 of the present disclosure includes a pair of the fixed rails 4 that is located between multiple solar cell panels 3 installed in the farm field 2 and the ground, a moving beam 5 whose both ends self-travel along the pair of fixed rails, and a slider 6 that self-travels along the moving beam.

Fruit trees such as grapes 11 are planted in the farm field 2. Hereinafter, grapes will be described as an example, but crops planted in the farm field are not limited thereto, and include vegetables such as tomatoes and tea. The farm field 2 has, for example, a rectangular shape with one side of 30 m, but is not limited thereto. For example, the shape may be a pentagonal shape in which one corner of a rectangle is cut, or may be an inclined surface. The rail system 1 of the present application is provided in such a farm field.

As illustrated in FIG. 2, the multiple fixed rails 4 are provided on the farm field 2 in parallel and at equal intervals. Among the multiple fixed rails 4, any selected adjacent fixed rails 4 constitute a pair of the fixed rails 4. The multiple fixed rails 4 as a whole have a shape following the shape of the farm field, and have, for example, a rectangular shape as illustrated in FIG. 2. Support pillars 7 are erected at corners of the farm field 2, and the multiple fixed rails 4 are supported on the farm field 2 by the support pillars 7. The positional relationship between the fixed rails 4 and the grapes 11 is such that each fixed rail 4 is provided between ridges as illustrated in FIG. 3 for example, but is not limited thereto, and each fixed rail 4 may be provided for every multiple ridges, or may be provided at predetermined intervals regardless of the ridges.

A frame 9 supporting the solar cell panels 3 is provided above the multiple fixed rails 4. The frame 9 has substantially the same form as the multiple fixed rails 4, and has, for example, a rectangular shape as a whole. The support pillars 7 supporting the multiple fixed rails 4 may support the frame 9, or support pillars provided separately from the support pillars 7 may support the frame 9.

The solar cell panels 3 are provided on the frame 9 at predetermined intervals as illustrated in FIG. 1. As illustrated in FIG. 3, tilting devices 31 are provided on the frame 9, and the solar cell panels 3 are respectively provided on the tilting devices 31. The tilting devices 31 tilt the solar cell panels 3.

### [1-2 Each Configuration of Rail System]

Next, each configuration will be described.

### [1-2-1 Fixed Rail]

The fixed rails 4 are provided between the multiple solar cell panels 3 installed in the farm field 2 and the ground. Each fixed rail is an elongated steel material, an aluminum alloy material, or the like, and a cross section thereof has a hollow rectangular shape with near the center of one side opened as illustrated in FIG. 3, for example. The fixed rail 4 has, for example, a length sufficient to cross the farm field 2. The steel material is, for example, an alloy mainly containing iron. The multiple fixed rails 4 are arranged parallel to each other along a direction parallel to the ground. For example, the multiple fixed rails 4 are arranged parallel to each other at an interval of 1 m, but the interval between the pair of fixed rails 4 may slightly change depending on the shape of the ground. As illustrated in FIG. 2, the multiple fixed rails 4 are connected by a bridge rail 8 connecting ends of the fixed rails, and the whole shape of the multiple fixed rails 4 is, for example, rectangular.

### <Support Pillar>

The multiple fixed rails 4 formed in a rectangular shape are supported by the support pillars 7 erected on the farm field 2. For example, the fixed rails 4 are fixed to the support pillars 7 by welding or by bolts and nuts. The support pillars 7 are erected, for example, at four corners of the farm field 2. The support pillars 7 each have a shape and a configuration sufficient to support the multiple fixed rails 4 to be supported by the support pillars and the solar cell panels 3, and are each a pillar-shaped member made of, for example, an iron alloy.

### <Solar Cell Panel>

One solar cell panel 3 includes one or multiple solar cells. The solar cell generates power by receiving sunlight. The solar cell panel 3 has, for example, a rectangular plate shape with one side of about 1 m. The multiple solar cell panels 3 are provided on the stand 9 via the tilting devices 31, respectively. The solar cell panel 3 supplies, for example, generated power to a power supply device 12 to be described later. The power supply device 12 supplies power to the moving beam 5 and the slider 6 to be described later.

### <Tilting Device>

The tilting device 31 directs the solar cell panel 3 in a predetermined direction based on a received command. The command is transmitted, for example, by a server (not illustrated). A server sends a command, and the tilting device 31 directs the solar cell panel, for example, toward the sun based on the command. In another example, by the server adjusting the direction of the solar cell panel, the environment of the crop grown under the solar cell panel 3 is adjusted to an environment suitable for the crop. The environment to be adjusted is, for example, light, rain, or wind.

### [1-2-2 Moving Beam]

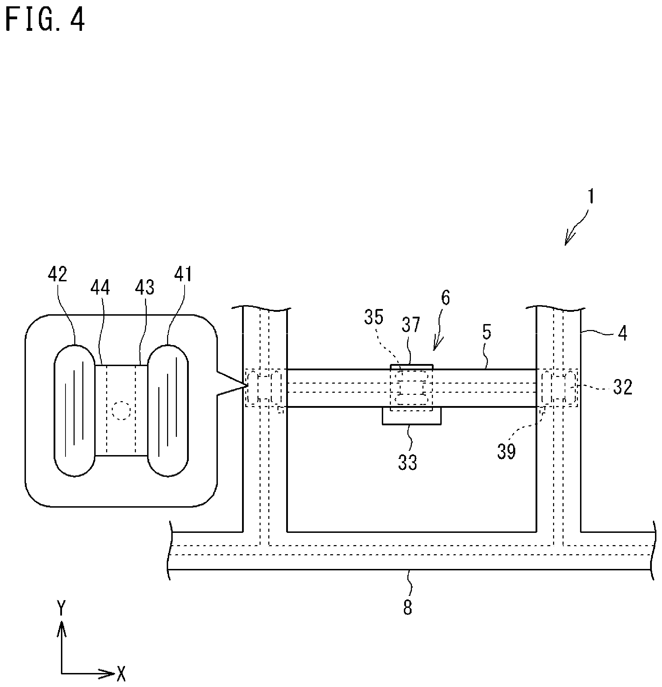

FIG. 4 is an enlarged view of the fixed rail 4, the moving beam 5, and the bridge rail 8 when viewed from the Z direction in FIG. 1.

Both ends of the moving beam 5 self-travel along the pair of fixed rails 4. The moving beam 5 includes at its both ends a pair of beam moving devices 32 for self-traveling along the pair of fixed rails, and a control device 33 that controls the pair of beam moving devices. Specifically, the moving beam 5 is an elongated steel material, and a cross section thereof has a hollow rectangular shape with near the center of one side opened similarly to the fixed rail 4 illustrated in FIG. 3, for example. The beam length to be defined below is substantially equal to, but may be longer than, the rail interval to be defined below.
Beam length: A length between centers of the two beam moving devices provided at both ends of the moving beam
Rail interval: An interval between centers of the pair of fixed rails

When the beam length is substantially equal to the rail interval, the longitudinal direction of the moving beam 5 may be made orthogonal to the direction in which the moving beam self-travels along the fixed rail 4. Meanwhile, when the beam length is longer than the rail interval, the longitudinal direction of the moving beam 5 may be tilted with reference to the direction orthogonal to the longitudinal direction of the fixed rail 4. In the pair of fixed rails 4, the moving beam 5 can be tilted by causing the beam moving device 32 provided at the other end of the moving beam 5 to run ahead of the beam moving device 32 provided at one end of the moving beam 5.

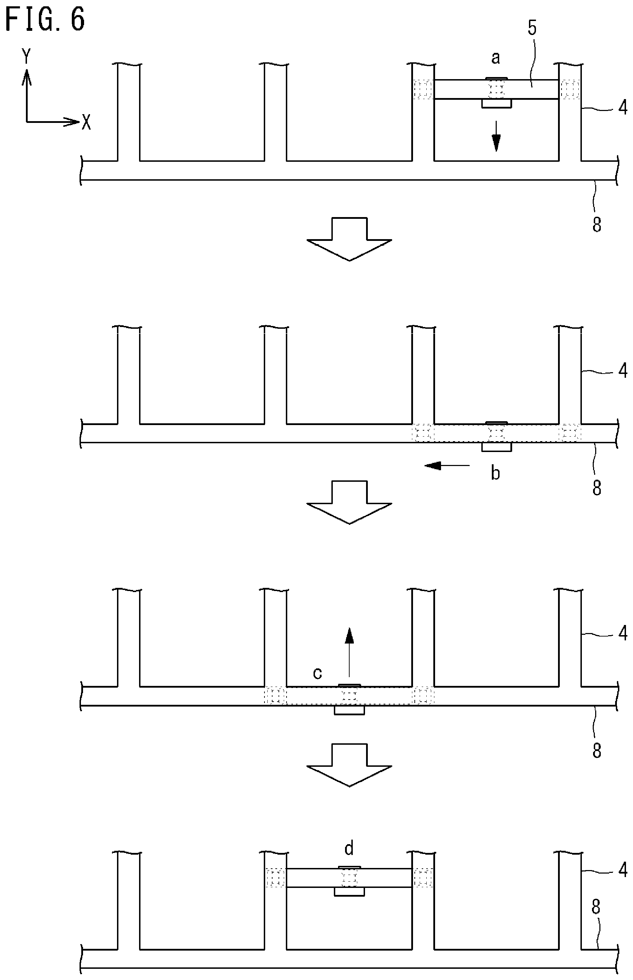

Alternatively, the beam moving device 32 may be configured to be movable in the longitudinal direction of the moving beam 5. This enables the interval between the beam moving devices 32 provided at one end and the other end of the moving beam 5 to be matched with the rail interval. Specifically, for example, when the moving beam 5 is at a position c of FIG. 6, the control device 33 rotates the beam moving device 32 by 90 degrees on the spot, moves the beam moving device to a predetermined position in the X-axis direction, and rotates the beam moving device by 90 degrees on the spot again. As a result, the control device 33 can match the interval between the beam moving devices 32 provided at one end and the other end of the moving beam 5 with the rail interval.

Note that, one moving beam 5 is illustrated in FIG. 1; however, not limited thereto, the rail system 1 of the present disclosure may include multiple moving beams 5. As a result, the work speed can be increased. In addition, multiple operations can be performed simultaneously.

### <Beam Moving Device>

The beam moving device 32 is a device that is provided at both ends of the moving beam 5 and causes the moving beam 5 to self-travel along the fixed rail 4. Each of the pair of beam moving devices 32 includes a first wheel 41 that travels on the fixed rail 4, a second wheel 42 that is disposed coaxially with the first wheel 41 and travels on the fixed rail 4, a first motor 43 that drives the first wheel 41, and a second motor 44 that drives the second wheel 42.

For example, as illustrated in an enlarged view of FIG. 4, the beam moving device 32 is disposed on the same axis as the first wheel 41, the first motor 43, the second motor 44, and the second wheel 42, and such a motor is also referred to as an in-wheel motor. As illustrated in FIG. 3, the beam moving device 32 is placed inside the fixed rail 4. The beam moving device 32 is provided in its central part with a shaft 34 for suspending and attaching the moving beam 5. The shaft 34 passes through an opening near the center of one side of the fixed rail 4 to connect the beam moving device 32 and the moving beam 5. A first end of the shaft 34 is connected to the moving beam 5 and a second end of the shaft 34 is connected to the beam moving device 32. The connection portion on the first end side or the second end side is configured to be freely turnable about the central axis of the shaft 34 as a center.

By rotating the first wheel 41 and the second wheel 42 in the same direction, the beam moving device 32 is guided by the fixed rail 4 and can move forward or backward in the Y direction of FIG. 4. Since the first end side or the second end side of the shaft 34 is configured to be freely turnable, by rotating the first wheel 41 and the second wheel 42 in opposite directions to each other, the beam moving device 32 can change the traveling direction on the spot without changing the position of the beam moving device 32.

### <Control Device>

The control device 33 controls each of the pair of beam moving devices 32, and independently controls the first motor 43 and the second motor 44. The control device 33 may be configured to control a slider moving device 35 and a farmwork tool 36 to be described later. For example, as illustrated in FIG. 3, the control device 33 is provided near the center of the moving beam 5 at a position not colliding with the fixed rail 4 and the bridge rail 8. The control device 33 is operated by electric power supplied by, for example, a battery (not illustrated) provided in the control device 33.

### <Configuration of Control Device>

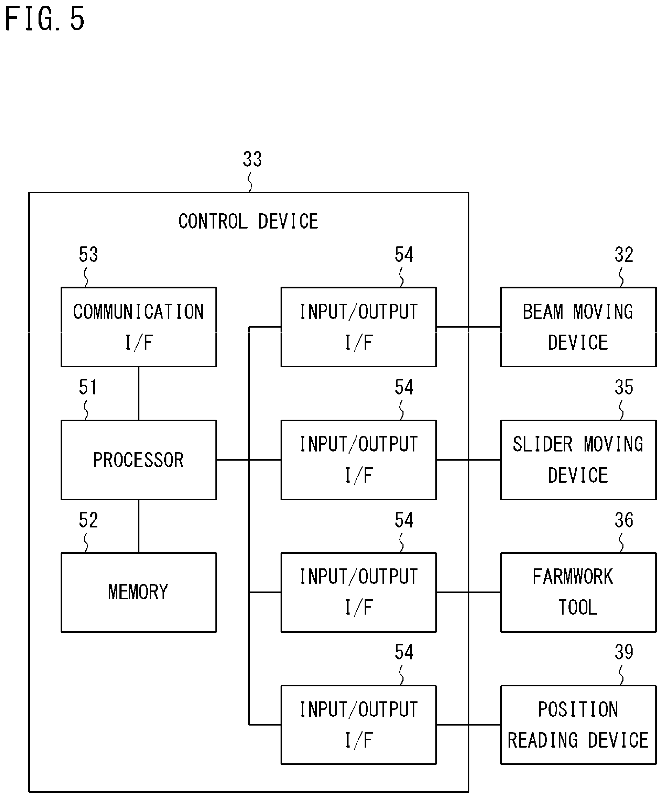

FIG. 5 is a block diagram illustrating an example of a hardware configuration of the control device 33. The control device 33 includes a processor 51, a memory 52, a communication interface (I/F) 53, and multiple input/output interfaces (I/F) 54.

### <Processor>

The processor 51 is, for example, a central processing unit (CPU). However, the processor 51 is not limited to the CPU. The processor 51 may be a graphics processing unit (GPU). The processor 51 is, for example, a multi-core processor. The processor 51 may be a single-core processor. The processor 51 may be, for example, an application specific integrated circuit (ASIC) or a programmable logic device such as a gate array or a field programmable gate array (FPGA).

### <Memory>

The memory 52 includes a volatile memory and a nonvolatile memory. The volatile memory is, for example, a semiconductor memory such as a static random access memory (SRAM) or a dynamic random access memory (DRAM). The nonvolatile memory is, for example, a flash memory, a hard disk, a read only memory (ROM), or the like. The nonvolatile memory stores a control program for controlling a rail system, which is a computer program, and data used for executing the control program. Each function of the control device 33 is exerted when the control program is executed by the processor 51. The control program can be stored in a recording medium such as a flash memory, a ROM, or a CD-ROM. The processor 51 controls the beam moving device 32, the slider moving device 35, and the farmwork tool 36 in accordance with the control program.

### <Communication I/F>

The communication I/F 53 is a communication interface capable of communicating with an external device via a network such as WiFi (registered trademark). Communication with the external device may be wireless communication or wired communication.

### <Input/output I/F>

The input/output I/F 54 is connected to the beam moving device 32, the slider moving device 35, the farmwork tool 36, and a position reading device 39 to be described later. The input/output I/F 54 transmits a command for controlling each of the devices connected thereto, and receives data from each of the devices. For example, in a case where a camera is connected to the farmwork tool 36, the input/output I/F 54 transmits a command to control the camera and receives image data from the camera.

### <Battery>

The battery in the control device 33 is, for example, a secondary battery such as a lithium ion battery. The battery is charged when the moving beam 5 is located at a position of the power supply device 12 illustrated in FIG. 1. Power is delivered between the control device 33 incorporating the battery and the power supply device 12 by, for example, a wireless power supply device. For example, power generated by the multiple solar cell panels 3 is supplied to the power supply device 12, but the present invention is not limited thereto, and power from a commercial power network may be supplied.

As another example, the battery in the control device 33 is configured to be replaceable. In this case, the power supply device 12 includes a battery exchanger (not illustrated) for exchanging the battery in the control device 33 and the battery charged in the power supply device 12. When the moving beam 5 returns to the position of the power supply device 12, the power supply device 12 replaces the battery of the control device 33. After the battery is replaced, the moving beam 5 quickly starts operating. While the moving beam 5 is operating, the power supply device 12 charges the replaced battery with power generated by the multiple solar cell panels 3.

### [1-2-3 Slider]

The slider 6 self-travels along the moving beam 5. The slider 6 includes a slider body 37 provided with the farmwork tool 36, and the slider moving device 35 that moves the slider body 37.

### <Slider body>

The slider body 37 has, for example, a shape like a lunch box. The slider body 37 is provided with the farmwork tool 36. The farmwork tool 36 may be configured to be detachable from the slider body 37.

The slider body 37 is provided with the slider moving device 35 via a shaft 38. The shaft 38 passes through an opening near the center of one side of the moving beam 5 to connect the slider moving device 35 and the slider body 37.

For example, a communication cable (not illustrated) connecting the slider body 37 and the control device 33 provided to the moving beam 5 is connected to the slider body 37. The control device 33 controls, for example, the farmwork tool 36 and the slider moving device 35 via the communication cable.

### <Farmwork Tool>

The farmwork tool 36 is, for example, an articulated robot arm, but is not limited thereto, and may be a moving device that moves a farmwork jig in the Z direction of FIG. 3. A first end of the farmwork tool 36 may be connected to the slider body 37, and a second end thereof may be attached with various farmwork jigs and may include a detachable mechanism that makes these jigs detachable. Examples of the jig include a sprinkler member (for example, a shower head) for sprinkling water, a sensor (for example, a camera) for detecting a condition of crops, a robot hand for harvesting fruits and vegetables, scissors for pruning, a spray for spraying a chemical, and a hook for carrying baggage.

### <Slider Moving Device>

The slider moving device 35 is guided by the moving beam 5 to move the slider 6 in the X direction in FIG. 4. The slider moving device 35 has the same configuration as the beam moving device 32, is disposed on the same axis as the first wheel 41, the first motor 43, the second motor 44, and the second wheel 42, and is placed inside the moving beam 5 as illustrated in FIG. 3. The first wheel 41 and the second wheel 42 of the slider moving device 35 travel inside the moving beam 5. The slider moving device 35 is controlled by, for example, the control device 33.

### [2 Operation of Rail System]

Next, the operation of the rail system 1 will be described. The rail system 1 moves the farmwork tool 36 to a predetermined position in the farm field 2 by self-travel of the moving beam 5 and the slider 6.

### <Operation of Moving Beam>

The moving beam 5 can move to a predetermined position between one end and the other end of the fixed rail 4 under the control of the control device 33. Specifically, the control device 33 controls the first motor 43 and the second motor 44 of each of the beam moving devices 32 provided at both ends of the moving beam 5. The first motor 43 and the second motor 44 controlled by the control device 33 rotate the first wheel 41 and the second wheel 42, respectively, to move the beam moving device 32 along the fixed rail 4.

### <Identification of Position of Moving Beam>

The control device 33 controls the beam moving device 32 to identify a current position of the moving beam in the rail system 1 in order to move the moving beam 5 to a predetermined position. In order to identify the current position of the moving beam 5, for example, a position reading device 39 is provided to the moving beam 5. Alternatively, the position of the moving beam 5 may be detected from the outside of the rail system 1, and information indicating the position may be transmitted to the control device 33.

The position reading device 39 is, for example, a reflective photosensor. In this case, a stripe-shaped tape is attached to the fixed rail 4, a stripe is detected by the reflective photosensor, and the control device 33 identifies the position of the moving beam 5 by counting the number of stripes. Alternatively, a two-dimensional barcode, for example, a QR code (registered trademark) may be attached to the fixed rail 4. The two-dimensional barcode includes information indicating a position where the two-dimensional barcode is attached. The position reading device 39, for example, a camera reads the two-dimensional barcode, and the control device 33 extracts information indicating the position from the read two-dimensional barcode, whereby the position of the moving beam 5 can be identified. Alternatively, the position reading device 39 may be a laser range finder. The distance from the moving beam 5 to a reference point is acquired by the laser range finder, whereby the position reading device 39 identifies the position of the moving beam 5. The reference point is, for example, a reflecting member provided at a predetermined position of the fixed rail 4 or the bridge rail 8.

### <Direction Control of Moving Beam>

The direction of the moving beam 5 is controlled in such a way that the longitudinal direction of the moving beam 5 is orthogonal to the longitudinal direction of the fixed rail 4. The control device 33 controls the first motor 43 and the second motor 44 of each of the beam moving devices 32 (which is also referred to as "the control device 33 controls the beam moving device 32") to control the direction of the moving beam 5. In order to control the direction of the moving beam 5, the control device 33 may obtain the position of the moving beam 5 on the fixed rails 4, located at both ends of the moving beam 5, using the position reading device 39, for example, to identify the direction of the moving beam 5. Alternatively, the control device 33 may identify the direction of the moving beam 5 by a three-axis magnetic sensor.

When the beam length of the moving beam 5 is longer than the rail interval, the longitudinal direction of the moving beam 5 is tilted with reference to the direction orthogonal to the longitudinal direction of the fixed rail 4. In this case, the control device 33 controls each of the beam moving devices 32 at both ends of the moving beam 5 to tilt the direction of the moving beam 5. The control device 33 acquires the rail interval by, for example, a sensor that measures the rail interval. Alternatively, the control device 33 may acquire the rail interval by storing, in the memory 52, a table indicating the relationship between the position in the rail system 1 and the rail interval.

### <Movement on Bridge Rail>

FIG. 6 is a schematic view illustrating a moving process of the moving beam on the bridge rail. The moving beam 5 can move along the bridge rail 8 when both ends of the moving beam 5 are located at the ends of the pair of fixed rails 4. The moving process of the moving beam 5 will be described with reference to FIG. 6.

First, it is assumed that the moving beam 5 is at a position a. The control device 33 controls each of the beam moving devices 32 to move the moving beam 5 to the end of the fixed rail 4, that is, a position b.

Next, the control device 33 controls each of the beam moving devices 32 to rotate the first wheel 41 and the second wheel 42 in opposite directions to turn the beam moving device 32 and change the traveling direction of the beam moving device 32 to the X direction of FIG. 6.

Subsequently, the control device 33 controls the beam moving devices 32 to move the moving beam 5 to the adjacent pair of fixed rails 4, that is, a position c. While not limited to the adjacent pair of fixed rails 4, the moving beam may be moved to a more distant pair of fixed rails 4.

Next, the control device 33 controls each beam moving device 32 to rotate the first wheel 41 and the second wheel 42 in opposite directions to turn the beam moving device 32 and change the traveling direction of the beam moving device 32 to the Y direction of FIG. 6.

Subsequently, the control device 33 controls each beam moving device 32 to move the beam moving device 32 in the Y direction of FIG. 6 to a position d.

As described above, when both ends of the moving beam 5 are located at the ends of the pair of fixed rails 4, the moving beam 5 can move along the bridge rail 8 and move to the adjacent pair of fixed rails 4.

### <Operation of Slider>

The slider 6 self-travels along the moving beam 5 and can move to a predetermined position between one end and the other end of the moving beam 5. Specifically, the control device 33 controls the first motor 43 and the second motor 44 of the slider moving device 35 included in the slider 6. The controlled first motor 43 and second motor 44 rotate the first wheel 41 and the second wheel 42, respectively, to move the slider 6 along the moving beam 5. As a result, the control device 33 can move the slider 6 including the farmwork tool 36 to a predetermined position from one end to the other end in the longitudinal direction of the moving beam 5.

### <Identification of Position of Slider>

The control device 33 controls each beam moving device 32 to move the slider 6 to a predetermined position. To this end, the control device 33 identifies a current position of the slider 6 on the moving beam 5. In order to identify the current position of the slider 6, the position reading device 39 may be provided similarly to the moving beam 5.

Alternatively, a stepping motor may be employed as the first motor 43 and the second motor 44 of the slider moving device 35. In this case, for example, a switch for detecting the presence of the slider 6 at one end of the moving beam 5 is provided, and the control device 33 identifies the position of the slider 6 by counting the number of drive pulses for rotating the stepping motor after the switch detects the slider 6.

### [3 Summary]

As described above, the rail system 1 of the present disclosure causes the moving beam 5 and the slider 6 to self-travel to move the slider 6 in the direction intersecting the fixed rail 4. As a result, the slider 6 including the farmwork tool 36 can also move in the direction intersecting the fixed rail 4, thus making it possible to solve the problem that the farmwork jig connected to the farmwork tool 36 does not reach fruit trees. In addition, since the farmwork tool 36 can move in the direction orthogonal to the longitudinal direction of the fixed rail 4, it is no longer necessary to provide the fixed rail 4 for each row of crops, so that the number of the fixed rails 4 can be reduced and the cost of the rail system 1 can be reduced.

### [4 Modified Example]

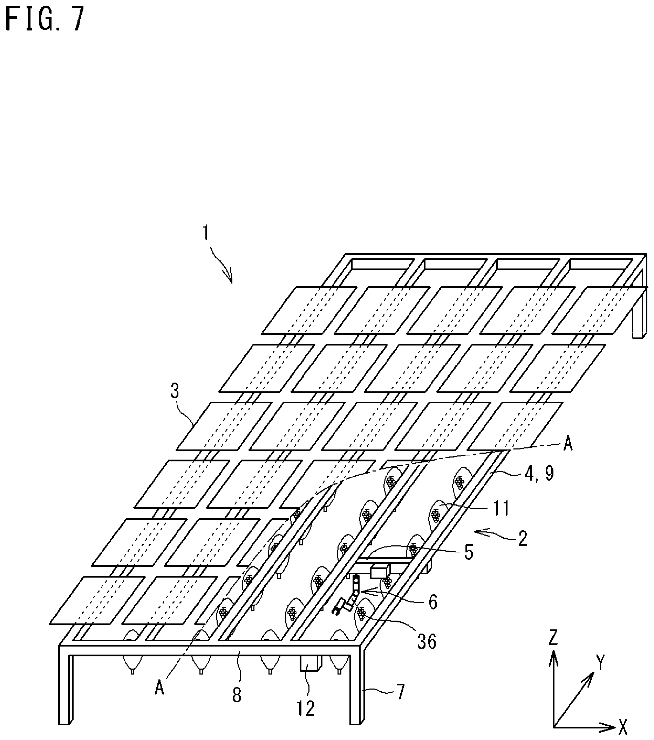

FIG. 7 is a perspective view illustrating an outline of a modified example of the rail system according to the present disclosure.

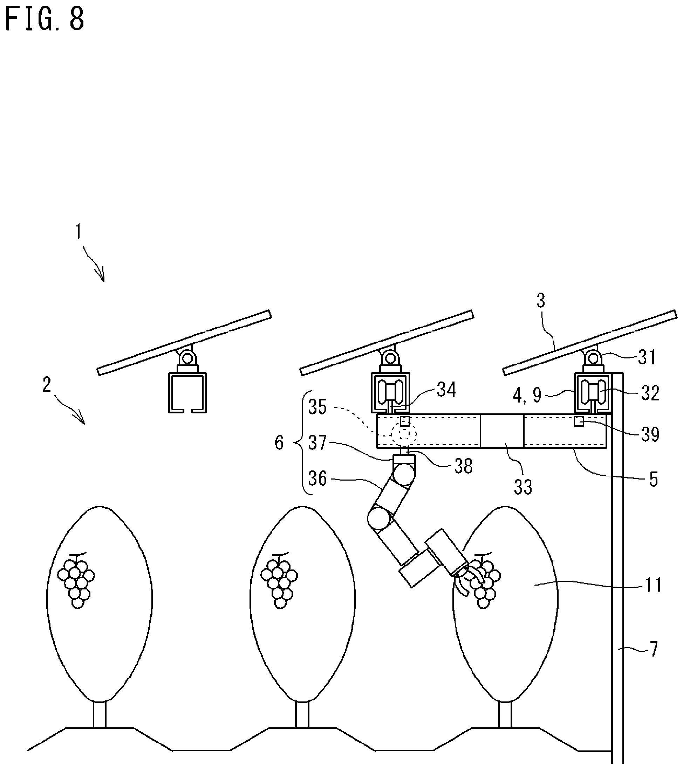

FIG. 8 is an enlarged schematic view of a cross section of FIG. 7.

In the above example, the frame that supports the multiple solar cell panels 3 is provided separately from the pair of fixed rails 4. In the present modified example, the pair of fixed rails 4 constitutes a part of the frame that supports the multiple solar cell panels 3 above the farm field.

As illustrated in FIG. 7, in the rail system 1 of the present modified example, the frame 9 is not provided separately from the fixed rail 4. FIG. 8 illustrates an example in which the fixed rail 4 constitutes a part of the frame 9. A pillar-shaped steel material having a rectangular cross section with one side opened functions as the frame 9, and the inside thereof functions as the fixed rail 4. The beam moving device 32 moves inside it. As another example, the fixed rail 4 may be provided in contact with the frame 9.

Since the fixed rail 4 constitutes a part of the frame 9, the height of the rail system 1 as a whole can be suppressed. Accordingly, the strength of the rail system 1 against wind and rain can be improved. In addition, since the fixed rail 4 and the frame 9 can be constructed at a time, the construction cost and the construction time can be reduced.

The embodiments disclosed herein are illustrative in all respects and are not restrictive. The scope of rights of the present invention is not limited to the above-described embodiments, and includes all modifications within the scope equivalent to the configurations described in the claims.

### REFERENCE SIGNS LIST

- 1: rail system
- 2: farm field
- 3: solar cell panel
- 4: fixed rail
- 5: moving beam
- 6: slider
- 7: support pillar
- 8: bridge rail
- 9: frame
- 11: grape
- 12: power supply device
- 31: tilting device
- 32: beam moving device
- 33: control device
- 34: shaft
- 35: slider moving device
- 36: farmwork tool
- 37: slider body
- 38: shaft
- 39: position reading device
- 41: wheel
- 42: wheel
- 43: motor
- 44: motor
- 51: processor
- 52: memory
- 53: communication interface (I/F)
- 54: input/output interface (I/F)

## Claims

1. A rail system comprising:
a pair of fixed rails that is located between a plurality of solar cell panels installed in a farm field and a ground;
a moving beam whose both ends self-travel along the pair of fixed rails; and
a slider that self-travels along the moving beam.

2. The rail system according to claim 1, wherein
the slider includes:
a slider body that is provided with a farmwork tool; and
a slider moving device that moves the slider body.

3. The rail system according to claim 1 or 2, further comprising
a bridge rail that connects ends of the pair of fixed rails, wherein
the moving beam is movable along the bridge rail when both of the ends thereof are located at the ends of the pair of fixed rails.

4. The rail system according to any one of claims 1 to 3, wherein
the moving beam includes at both ends thereof a pair of beam moving devices for self-travelling on the pair of fixed rails, and a control device that controls the pair of beam moving devices,
each of the pair of beam moving devices includes:
a first wheel that travels on the fixed rail;
a second wheel that is disposed coaxially with the first wheel and travels on the fixed rail;
a first motor that drives the first wheel; and
a second motor that drives the second wheel, and
the control device independently controls the first motor and the second motor of each of the beam moving devices.

5. The rail system according to any one of claims 1 to 4, further comprising
a power supply device that supplies power, generated by the plurality of solar cell panels, to the moving beam and the slider.

6. The rail system according to any one of claims 1 to 5, wherein the pair of fixed rails is a part of a frame that supports the plurality of solar cell panels above the farm field.
